Europäisches Patentamt

European Patent Office

Office européen des brevets

(11) Veröffentlichungsnummer: **0 036 908**
**B1**

## (12) EUROPÄISCHE PATENTSCHRIFT

(45) Veröffentlichungstag der Patentschrift:
**27.06.84**

(21) Anmeldenummer: **80107586.2**

(22) Anmeldetag: **04.12.80**

(51) Int. Cl.³: **B 60 C 17/04**

(54) **Notlaufring für Fahrzeug-Luftreifen.**

(30) Priorität: **08.03.80 DE 3008972**

(43) Veröffentlichungstag der Anmeldung:
**07.10.81 Patentblatt 81/40**

(45) Bekanntmachung des Hinweises auf die Patenterteilung:
**27.06.84 Patentblatt 84/26**

(84) Benannte Vertragsstaaten:
**BE FR GB IT LU NL SE**

(56) Entgegenhaltungen:
**EP - A - 0 011 698
DE - A - 2 712 242
DE - A - 2 817 394
FR - A - 2 085 827
FR - A - 2 095 392
FR - A - 2 095 396
FR - A - 2 178 114
FR - A - 2 185 515
FR - A - 2 283 789
FR - A - 2 306 095
FR - A - 2 348 069
US - A - 3 872 907
US - A - 4 091 854**

(73) Patentinhaber: **VORWERK & SOHN GmbH. & Co. KG.,
Obere Lichtenplatzer Strasse 336,
D-5600 Wuppertal-Barmen (DE)**

(72) Erfinder: **Stein, Hermann, Scharpenacker Weg 12,
D-5600 Wuppertal-Barmen (DE)**
Erfinder: **Piepenbrink, Ulrich, Schützenstrasse 5,
D-5830 Schwelm (DE)**

## Beschreibung

Die Erfindung betrifft einen aus Gummi oder anderen Elastomeren bestehenden Notlaufring in schlauchlosen, auf Flachbettfelgen aufgezogenen Luftreifen für Kraftfahrzeuge, der mit seinem den Raum zwischen den Reifenwülsten einnehmenden Fußteil auf der Felge aufsitzt und an mindestens einer seiner dem Luftreifen zugewandten Seiten mindestens einen umlaufenden, ein Schmiermittel enthaltenden Hohlraum besitzt, welcher mittels einer Verschlußlippe und einer dieser zugeordneten Gegenlippe verschließbar ist und bei intaktem Luftreifen durch dessen Innendruck sowie durch eine axiale Vorspannung geschlossen gehalten wird, und der mindestens eine umlaufende Hinterschneidung aufweist, deren die Hinterschneidung bildende, elastisch federnde Zungen als Hebelkraftarme dienen, welche infolge von Luftdruckverlust im Luftreifen durch den Druck der Reifendecke auf den Notlaufring zum Boden der Hinterschneidung hin gedrückt werden und dadurch die als Hebellastarme mit ihnen verbundenen Verschlußlippen in eine das Schmiermittel freigebende Öffnungsstellung überführen, so daß dieses zur Schmierung zwischen die sich berührenden Flächen von Luftreifen und Notlaufring gelangt.

Ein Notlaufring der genannten Art ist aus der unter Artikel 54 Absatz 3 fallenden EP-A-0 011 698 bekannt. Danach ist bei einer Ausführung der das Schmiermittel enthaltende Hohlraum dadurch gebildet, daß eine in die Flanke des Notlaufringes eingelassene Nut mit ihrer offenen Seite an der Reifeninnenwand anliegt und gegen den Reifeninnenraum durch eine Dichtlippe abgedichtet ist, welche durch den Luftdruck im Reifen gegen dessen Innenwand gepreßt wird. Bei einer anderen Ausführung des bekannten Notlaufringes sind die schmiermittelgefüllten Hohlräume zwischen der Außenseite und der mittigen umlaufenden Hinterschneidung des Notlaufringes angeordnet, wobei die Dichtlippen dank einer beim Einbau des Notlaufringes in einen Luftreifen erzeugten seitlichen Vorspannung im Zusammenwirken mit den Randzonen des Notlaufringes jeweils einen aus dem Hohlraum in den Reifeninnenraum führenden Schmiermittel-Austrittskanal abdichten. In beiden Fällen ist die Funktionsfähigkeit des Notlaufringes hinsichtlich des Öffnens der schmiermittelgefüllten Hohlräume durch Hebelwirkung bei Eintritt des Notlaufs gewährleistet. Wie die Praxis jedoch erwiesen hat, kann bei Fahrzeugen, die mit sehr starken Motoren ausgerüstet sind und demzufolge relativ hohe Geschwindigkeiten erreichen können, der Fall eintreten, daß bereits bei einer bestimmten hohen Geschwindigkeit aufgrund entsprechend großer Fliehkraft die Dichtlippen aus ihrer die Schließstellung bewirkenden Anlage an den Hohlräumen weggerissen werden, so daß die Freigabe des Schmiermittels bereits vor Eintritt des Notlaufs erfolgt.

Der Erfindung liegt die Aufgabe zugrunde, zum vorübergehenden Verschließen der schmiermittelgefüllten Hohlräume Abdichtungen zu schaffen, die zuverlässiger als die bisher bekannten Hohlraumverschlüsse sind und die sich darüber hinaus einfach herstellen lassen sowie zur Gewährleistung einer leichten Montage des Notlaufringes beitragen.

Diese Aufgabe wird durch die in den Kennzeichen der unabhängigen Ansprüche angegebenen Merkmale gelöst.

Der wesentliche Vorteil der Erfindung besteht darin, daß für eine verschlußsichere Unterbringung des Schmiermittels bis zum Eintritt des Notlaufs gesorgt ist. Weitere Vorteile der Erfindung sind in der nachstehenden Beschreibung einzelner Ausführungen dargetan.

Die Erfindung wird nachfolgend anhand mehrerer in der Zeichnung dargestellter Ausführungsbeispiele des näheren erläutert. In der Zeichnung zeigt, und zwar jeweils im Querschnitt,

Fig. 1 einen in einen Luftreifen mit Flachbettfelge eingebrachten Notlaufring, wobei die den schmiermittelgefüllten Hohlraum verschließenden Dichtlippen in an sich bekannter Weise einander zugeordnet sind,

Fig. 2 einen nicht montierten Notlaufring gemäß der Erfindung, bei dem die Verschlußlippe eine zahnförmige Schließfläche aufweist,

Fig. 2a eine zweite Ausführung eines erfindungsgemäßen Notlaufringes mit zahnartig ineinandergreifenden Dichtlippen,

Fig. 3 eine dritte Ausführung eines erfindungsgemäßen Notlaufringes mit hakenartig verschlossenen Dichtlippen,

Fig. 4 eine vierte Ausführung eines erfindungsgemäßen Notlaufringes, dessen Dichtlippen entlang den Schließrändern aneinandervulkanisiert sind,

Fig. 5 eine fünfte Ausführung eines erfindungsgemäßen Notlaufringes, bei dem der Schließbereich der Dichtlippen von außen mit einer aufvulkanisierten Elastomerfolie abgedeckt ist,

Fig. 6 eine sechste Ausführung eines erfindungsgemäßen Notlaufringes, bei dem der Öffnungsspalt des schmiermittelgefüllten Hohlraumes mittels eines umlaufenden Schlauches abgedichtet ist,

Fig. 7 eine siebte Ausführung eines erfindungsgemäßen Notlaufringes, bei dem der als Hohlraumverschluß dienende Schlauch mit einem in der Verschlußlippe verankerten Steg versehen ist,

Fig. 8 eine achte Ausführung eines erfindungsgemäßen Notlaufringes, bei welchem in dem Hohlraum ein schmiermittelgefüllter Schlauch untergebracht ist, und

Fig. 9 eine neunte Ausführung eines erfindungsgemäßen Notlaufringes, bei welchem in einer von der mittigen Hinterschneidung aus zugänglichen Nut ein schmiermittelgefüllter Schlauch untergebracht ist.

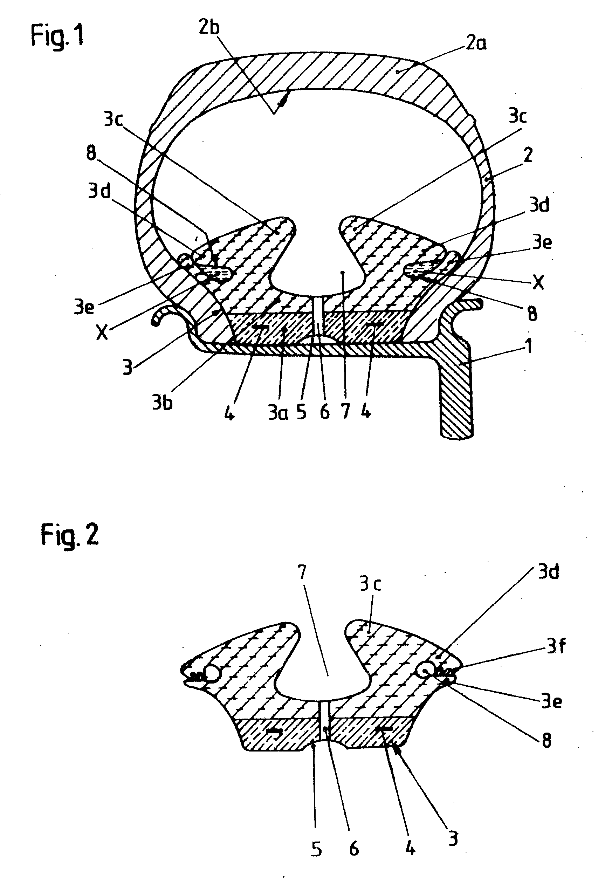

Fig. 1 zeigt einen in einen schlauchlosen Luftreifen 2 eingebrachten, aus Gummi oder anderen Elastomeren bestehenden Notlaufring 3, der in seinem grundsätzlichen Aufbau aus der EP-A-0 011 698 bekannt ist. Der Luftreifen 2 und der Notlaufring 3 sind auf eine Flachbettfelge 1 aufgezogen. Der Notlaufring 3 besitzt einen Fußteil 3a und einen an diesen sich anschließenden Oberteil 3b. Der Fußteil 3a ist durch zwei oder mehrere Stahldrahtbündel 4 verstärkt, die dem Notlaufring 3 einen festen Sitz auf der Flachbettfelge 1 verschaffen. Zur weiteren Sicherung seines Sitzes auf der Flachbettfelge 1 kann der Fußteil 3a aus einem Elastomer bestehen, welches härter ist als das für den Oberteil 3b verwendete. Auf seiner Unterseite weist der Fußteil 3a eine mittig angeordnete, zur Flachbettfelge 1 hin offene umlaufende Nut 5 auf, von der aus mehrere über den Ringumfang verteilte Durchlaßkanäle 6 zum Reifeninnenraum führen. Dieses Kanalsystem gewährleistet beim Aufpumpen des Luftreifens 2 ein einwandfreies Einströmen der Luft vom Ventil in den Reifeninnenraum.

Der Oberteil 3b steigt zur Mitte hin leicht an und weist eine mittig angeordnete, umlaufende Hinterschneidung 7 auf, die in ihrer Kontur einem auf dem Kopf stehenden Pilz gleicht. Durch diese Hinterschneidung 7 sind zwei elastisch federnde Zungen 3c gebildet, von denen jede zur Seite hin in eine Verschlußlippe 3d übergeht. Jede Verschlußlippe 3d liegt an einer Gegenlippe 3e an und umschließt mit dieser einen mit einem Schmiermittel X gefüllten umlaufenden Hohlraum 8. Durch den Fülldruck des Luftreifens 2 werden die Verschlußlippen 3d fest gegen die an der Innenseite des Luftreifens 2 anliegenden Dichtlippen 3e gepreßt. Verliert der Luftreifen 2 durch äußere Einwirkung die Luft, so senkt sich die Reifendecke 2a nach unten, bis sie mit ihrer Innenseite 2b auf den Notlaufring 3 trifft. Die unter dem Achsdruck des Fahrzeuges stehende Reifendecke 2a drückt die beiden Zungen 3c des Notlaufringes 3 in die Hinterschneidung 7 hinein, wodurch eine Hebelwirkung auf die Verschlußlippen 3d ausgeübt wird, und zwar derart, daß diese angehoben werden und das bei Betriebstemperaturen des Luftreifens 2 von über 40° C sich verflüssigende Schmiermittel X freigeben, das zwischen die sich berührenden Flächen von Luftreifen 2 und Notlaufring 3 gelangt und die zwischen den Berührungsflächen auftretende Reibung wesentlich herabsetzt.

Als Schmiermittel sind solche Stoffe einzusetzen, die weder eine quellende noch eine andere schädigende Wirkung auf Elastomere ausüben, wie zum Beispiel Polyglykole oder Salze von Fettsäuren.

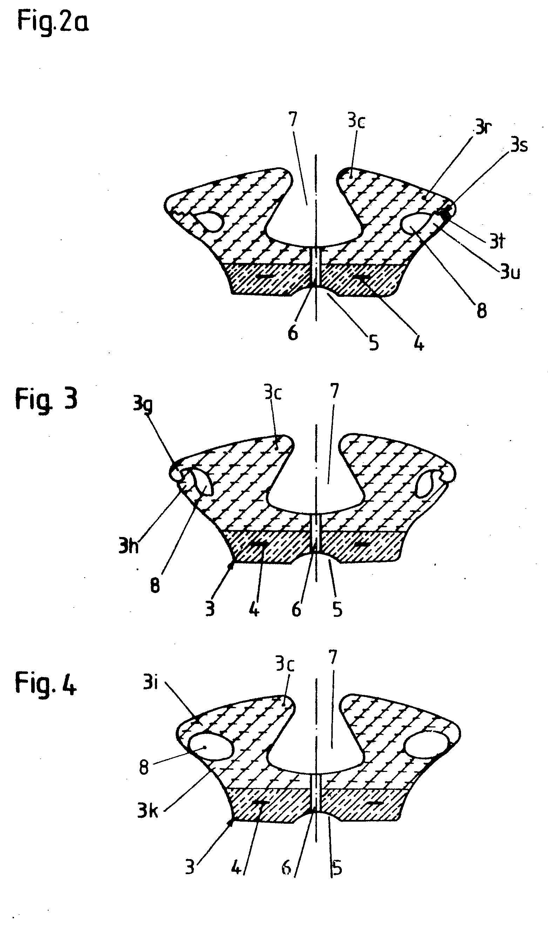

Fig. 2 zeigt ein erstes Ausführungsbeispiel des erfindungsgemäßen Notlaufringes. Bei dieser Ausführung ist die Verschlußlippe 3d, die zusammen mit der Gegenlippe 3e den zur Aufnahme eines Schmiermittels bestimmten Hohlraum 8 bis zum Eintritt des Notlaufs verschließt, an ihrer der Gegenlippe 3e zugewandten Seite mit drei zahnförmigen Vorsprüngen 3f versehen. Diese Vorsprünge 3f bewirken, daß sich die Schließflächen der beiden durch den Reifeninnendruck fest gegeneinander gepreßten Dichtlippen 3d und 3e einander gut anschmiegen, wodurch eine langzeitig gute Abdichtung des Hohlraumes 8 erreicht ist. Dieselbe Dichtwirkung würde auch erzielt, wenn statt der Verschlußlippe 3d die Gegenlippe 3e mit zahnförmigen Vorsprüngen versehen wäre.

Bei der in Fig. 2 gezeigten Ausführung eines Notlaufringes gemäß der Erfindung ist ein zuverlässiger Verschluß des Hohlraumes 8 erfindungsgemäß dadurch erreicht, daß die Verschlußlippe 3r eine gezahnte Schließfläche 3s aufweist, die in eine in versetzter Anordnung entsprechend gezahnte Schließfläche 3t der Gegenlippe 3u eingreift.

In Fig. 3 ist ein Notlaufring dargestellt, bei dem die Verschlußlippe 3g erfindungsgemäß ein hakenförmiges Ende aufweist, das in eine diesem angepaßte, leicht hinterschnittene Ausnehmung der Gegenlippe 3h eingreift, solange auf diese ein seitlicher Druck ausgeübt wird, wie dies nach erfolgter Montage des Notlaufringes der Fall ist. Bei Eintritt der Notlaufsituation wird — wie bereits zuvor beschrieben — aufgrund der dann eintretenden mechanischen Wirkungen die Verschlußlippe 3g aus dem Eingriff mit der Gegenlippe 3h gelöst und das in dem Hohlraum 8 gespeicherte Schmiermittel freigegeben.

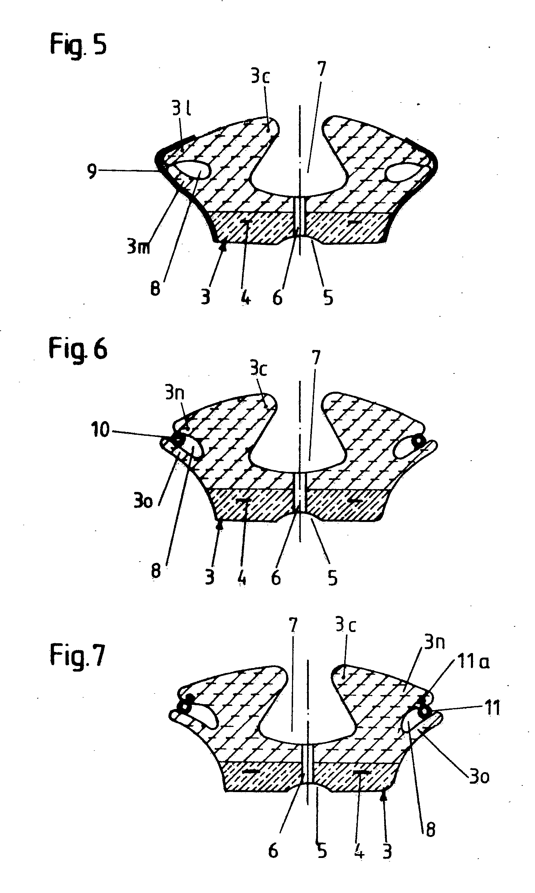

Die Ausführung nach Fig. 4 offenbart eine weitere Möglichkeit, das Schmiermittel solange unter Verschluß zu halten, wie im Reifen der zu dessen normalem Betrieb notwendige Luftfülldruck vorhanden ist. Und zwar sind die Verschlußlippe 3i und die Gegenlippe 3k entlang ihren freien Rändern durch eine bei der Herstellung des Notlaufringes durch Vulkanisieren des Grundmaterials erzeugte dünne Haut miteinander verbunden, die als Sollbruchstelle dient. Bei Eintritt des Notlaufs wird durch die an der zugeordneten Zunge 3c wirksam werdende Hebelarmkraft die Verschlußlippe 3i aus ihrer Schließstellung nach oben bewegt, wodurch die Haut aufgerissen wird und das Schmiermittel aus dem Hohlraum 8 heraustreten kann. Der mit der Rohlingsherstellung des Notlaufringes im Hohlstrang-Spritzverfahren erzeugte Hohlraum 8 wird in der Vulkanisierungsphase beispielsweise durch ein eingegebenes Treibmittel aufrechterhalten. Nach der Vulkanisation wird das Treibmittel ausgelassen und das Schmiermittel eingefüllt.

Bei dem Notlaufring gemäß Fig. 5 sind die Verschlußlippe 3l und die Gegenlippe 3m so geformt, daß bei nicht montiertem Notlaufring zwischen diesen Dichtlippen und dem Hohlraum 8 nur ein kleiner Öffnungsspalt vorhanden ist. Dieser Öffnungsspalt ist von außen durch einen dünnen, vulkanisierten, umlaufenden Elastomerstreifen 9 abgedeckt, der beispielsweise mittels eines kalt vulkanisierenden Klebers befestigt sein kann. Im Notlauffall wird der Elastomerstreifen 9 infolge der bekannten Hebeleinwirkungen aufgerissen.

Auch bei dem Notlaufring gemäß Fig. 6 wird zur Abdichtung des Hohlraumes 8 ein Hilfsmittel verwendet, und zwar ein aus elastischem Werkstoff bestehender Schlauch 10, dessen Enden miteinander verbunden sind und der in seiner Länge dem Umfang des umlaufenden Hohlraumes 8 entspricht. Dieser Schlauch 10 wird vor der Montage des Notlaufringes in den Hohlraum 8 lose eingelegt und gegebenenfalls an der Verschlußlippe 3n oder an der Gegenlippe 3o zusätzlich noch verklebt. Die bei der Montage gegen den Schlauch 10 gepreßte Gegenlippe 3o schließt mit Hilfe des Schlauches 10 den Hohlraum 8 dicht ab. Anstelle des Schlauches 10 kann auch ein Strang aus elastomerem Vollmaterial eingesetzt werden.

In Abwandlung zu der Ausführung nach Fig. 6 besitzt der in Fig. 7 dargestellte Schlauch 11 einen umlaufenden oder unterbrochenen Steg 11a, welcher in eine dem Steg entsprechende umlaufende Aussparung der Verschlußlippe 3n eingreift und somit dem Schlauch 11 eine feste Lage im Öffnungsspalt des Hohlraumes 8 sichert. Ebenso wie bei der Ausführung gemäß Fig. 6 wird die Gegenlippe 3o bei der Montage des Notlaufringes gegen den den Hohlraum 8 abdichtenden Schlauch 11 gepreßt. Der von dem Schlauch 11 ausgehende Steg 11a kann auch in einer in der Gegenlippe 3o befindlichen Aussparung verankert sein.

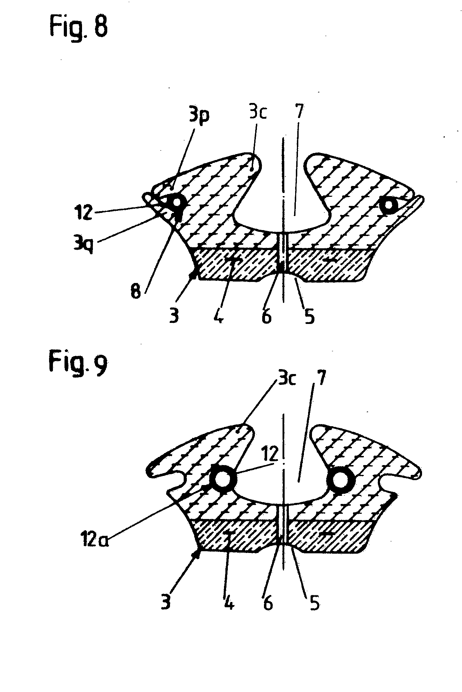

Bei dem Notlaufring gemäß der Fig. 8 ist vorgesehen, das Schmiermittel in einem beispielsweise aus Polyäthylen bestehenden Schlauch 12 oder in geeignet gestalteten Schlauchstücken unterzubringen und diesen Schlauch 12 bzw. diese Schlauchstücke in den durch die Verschlußlippe 3p und die Gegenlippe 3q verschließbaren Hohlraum 8 einzulegen. Sobald der Zusammenbau von Notlaufring, Luftreifen und Flachbettfelge erfolgt ist, liegt die unter Seitendruck stehende Verschlußlippe 3p fest an der Gegenlippe 3q an, so daß der schmiermittelgefüllte Schlauch 12 sicher in dem Hohlraum 8 eingeschlossen ist. Bei Eintritt des Notlaufs wird der Hohlraum 8 geöffnet und der Schlauch 12 aus dem Hohlraum 8 in den Reifeninnenraum geschleudert, wo er durch Reibung, Quetschung und Wärme zwischen Reifendecke und Notlaufring zerstört wird und das Schmiermittel freigibt.

Bei dem Ausführungsbeispiel gemäß Fig. 9 sind die die mittige Hinterschneidung 7 bildenden Zungen 3c zu den beiden Seiten des Notlaufringes 3 hin derart hinterschnitten, daß jeweils eine Nut 12a gebildet ist. In jeder Nut 12a ist ein mit einem Schmiermittel gefüllter Schlauch 12 eingeklemmt, der bis auf einen geringen Teil seiner Oberfläche von der Nutwand umgriffen wird. Bei Einsetzen des Notlaufs drückt die Reifendecke die Zungen 3c zum Boden der Hinterschneidung 7 hin, wodurch die beiden Hohlräume 8 eine Querschnittsverkleinerung erfahren, aufgrund welcher die Schläuche 12 zerquetscht werden, so daß das in diesen gespeicherte Schmiermittel austreten und die ihm zugewiesene Funktion erfüllen kann.

## Patentansprüche

1. Aus Gummi oder anderen Elastomeren bestehender Notlaufring (3) in schlauchlosen, auf Flachbettfelgen (1) aufgezogenen Luftreifen (2) für Kraftfahrzeuge, der mit seinem den Raum zwischen den Reifenwülsten einnehmenden Fußteil (3a) auf der Felge aufsitzt und an mindestens einer seiner dem Luftreifen (2) zugewandten Seiten mindestens einen umlaufenden, ein Schmiermittel enthaltenden Hohlraum (8) besitzt, welcher mittels einer Verschlußlippe (3d, 3r, 3g, 3i, 3l, 3n, 3p) und einer dieser zugeordneten Gegenlippe (3e, 3u, 3h, 3k, 3m, 3o, 3q) verschließbar ist und bei intaktem Luftreifen (2) durch dessen Innendruck sowie durch eine axiale Vorspannung geschlossen gehalten wird, und der mindestens eine umlaufende Hinterschneidung (7) aufweist, deren die Hinterschneidung bildende, elastisch federnde Zunge (3c) als Hebelkraftarme dienen, welche infolge von Luftdruckverlust im Luftreifen (2) durch den Druck der Reifendecke (2a) auf den Notlaufring (3) zum Boden der Hinterschneidung (7) hin gedrückt werden und dadurch die als Hebellastarme mit ihnen verbundenen Verschlußlippen (3d, 3r, 3g, 3i, 3l, 3n, 3p) in eine das Schmiermittel freigebende Öffnungsstellung überführen, so daß dieses zur Schmierung zwischen die sich berührenden Flächen von Luftreifen (2) und Notlaufring (3) gelangt, dadurch gekennzeichnet, daß die Verschlußlippe (3d) oder die Gegenlippe (3e) mit einer oder mehreren zahnförmigen Vorsprüngen (3f) versehen ist, die den mit dem Schmiermittel gefüllten Hohlraum (8) in dem unter Fülldruck stehenden Luftreifen (2) abdichten.

2. Notlaufring nach dem Oberbegriff des Anspruches 1, dadurch gekennzeichnet, daß die Verschlußlippe (3r) eine gezahnte Schließfläche (3s) aufweist, die in eine in versetzter Anordnung entsprechend gezahnte Schließfläche (3t) der Gegenlippe (3u) eingreift und den mit dem Schmiermittel gefüllten umlaufenden Hohlraum (8) in dem unter Luftdruck stehenden Luftreifen (2) abdichtet.

3. Notlaufring nach dem Oberbegriff des Anspruches 1, dadurch gekennzeichnet, daß das Ende der Verschlußlippe (3g) im Querschnitt hakenförmig ausgebildet ist und in eine leicht hinterschnittene und der Kontur des hakenförmigen Endes angepaßte Ausnehmung der Gegenlippe (3h) lösbar eingreift, wodurch der mit dem Schmiermittel gefüllte umlaufende Hohlraum (8) in dem unter Luftdruck stehenden Luftreifen (2) dicht verschlossen wird.

4. Notlaufring nach dem Oberbegriff des Anspruches 1, dadurch gekennzeichnet, daß die an beiden Seiten des Notlaufringes (3) angeordneten umlaufenden Dichtlippen, nämlich die Verschlußlippe (3i) und die Gegenlippe (3k), an ihren Enden durch eine bei der Herstellung des Notlaufringes (3) durch Vulkanisieren des Grundmaterials erzeugte dünne Haut miteinander verbunden sind, die als Sollbruchstelle für den Notlauf des Luftreifens (2) dient.

5. Notlaufring nach dem Oberbegriff des Anspruches 1, dadurch gekennzeichnet, daß der durch die Verschlußlippe (3l) und die Gegenlippe (3m) gebildete und mit dem Schmiermittel gefüllte umlaufende Hohlraum (8) von außen durch einen rundumlaufenden Folienstreifen (9) verschlossen ist, der als Sollbruchzone für den Notlauf des Luftreifens (2) dient.

6. Notlaufring nach dem Oberbegriff des Anspruches 1, dadurch gekennzeichnet, daß der durch die Verschlußlippe (3n) und die Gegenlippe (3o) gebildete umlaufende Hohlraum (8) mit Hilfe eines zwischen diesen beiden Dichtlippen lose eingelegten oder an einer der Dichtlippen durch Verkleben befestigten, im Querschnitt runden und aus einem Elastomer bestehenden umlaufenden Stranges oder Schlauches (10) bei der Montage des Notlaufringes (3) durch seitlichen Druck auf die Gegenlippe (3o) verschlossen wird.

7. Notlaufring nach Anspruch 6, dadurch gekennzeichnet, daß an dem als Verschluß des mit dem Schmiermittel gefüllten umlaufenden Hohlraumes (8) dienenden umlaufenden Strang oder Schlauch (11) ein umlaufender oder unterbrochener Steg (11a) befestigt ist, der in eine entsprechende umlaufende Aussparung der Verschlußlippe (3n) oder der Gegenlippe (3o) eingreift.

8. Notlaufring nach dem Oberbegriff des Anspruches 1, dadurch gekennzeichnet, daß in dem durch die Verschlußlippe (3p) und die Gegenlippe (3q) gebildeten Hohlraum (8) ein Schmiermittel gefüllter, gegebenenfalls aus Teilstücken bestehender, endseitig verschlossener oder endloser Schlauch (12) untergebracht ist, der bei Eintritt des Notlaufs aus dem sich öffnenden Hohlraum (8) in den Reifeninnenraum gelangt, wo er unter Einwirkung von Reibung, Quetschung und Wärme zerstört wird und das Schmiermittel freisetzt.

9. Notlaufring nach dem Oberbegriff des Anspruches 1, dadurch gekennzeichnet, daß ein dünnwandiger, an seinen Enden verschlossener, mit dem Schmiermittel gefüllter Schlauch (12) in eine der Form des Schlauches angepaßte Nut (12a) der umlaufenden Hinterschneidung (7) eingeklemmt und gegebenenfalls zusätzlich in der Nut (12a) durch Verkleben befestigt ist, der im Falle des Notlaufs durch Druckbeaufschlagung seitens der zugeordneten Zunge (3c) zerstört wird und somit das Schmiermittel freigibt.

## Claims

1. A safety ring (3) consisting of rubber or other elastomers in tubeless pneumatic tyres (2) fitted on to flat-base rims (1) for motor vehicles, of which the base portion (3a) occupying the space between the tyre beads is mounted on the rim and which on at least one of its sides facing the pneumatic tyre (2) comprises at least one continuous cavity (8) which contains a lubricant and which may be closed by means of a closure lip (3d, 3r, 3g, 3i, 3l, 3n, 3p) an a counter lip (3e, 3u, 3h, 3k, 3m, 3o, 3q) associated therewith and, when the pneumatic tyre (2) is intact, is held closed by the internal pressure of the latter and by an axial prestressing, and which comprises at least one continuous undercut (7), whose resilient tongues (3c) forming the said undercut act as leverage arms which as a result of a fall in air pressure in the pneumatic tyre (2) are pressed towards the base of the undercut (7) by the pressure of the tyre casing (2a) on to the safety ring (3) and thus move the closure lips (3d, 3r, 3g, 3i, 3l, 3n, 3p) into an open position releasing the lubricant so that the latter penetrates between the touching surfaces of the pneumatic tyres (2) and the safety ring (3) for the purpose of lubrication, characterized in that the closure lip (3d) or the counter lip (3e) is provided with one or more tooth-shaped projections (3f) which seal off the cavity (8) filled with the lubricant in the pneumatic tyre (2) which is under inflation pressure.

2. A safety ring according to the preamble of claim 1, characterized in that the closure lip (3r) comprises a serrated closure surface (3s) which engages in a closure surface (3t) of the counter lip (3u) serrated in a correspondingly staggered manner and which seals off the continuous cavity (8) filled with the lubricant in the pneumatic tyre (2) which is under air pressure.

3. A safety ring according to the preamble of claim 1, characterized in that the end of the closure lip (3g) is made hook-shaped in cross-section and engages releasably in a slightly undercut recess in the counter lip (3h) adapted to the profile of the hook-shaped end, so that the continuous cavity (8) filled with the lubricant is closed in a sealed manner in the pneumatic tyre (2) which is under air pressure.

4. A safety ring according to the preamble of claim 1, characterized in that the continuous sealing lips disposed on both sides of the safety ring (3), namely the closure lip (3i) and the counter lip (3k), are joined together at their ends by a thin skin which is produced by vulcanization of the base material during the manufacture of the safety ring (3) and which acts as a predetermined breaking point for the emergency running of the pneumatic tyre (2).

5. A safety ring according to the preamble of claim 1, characterized in that the continuous cavity (8) formed by the closure lip (3l) and the counter lip (3m) and filled with the lubricant is closed off from the outside by a foil strip (9) which is continuous all round and which acts as a predetermined breaking area for the emergency running of the pneumatic tyre (2).

6. A safety ring according to the preamble of claim 1, characterized in that the continuous cavity (8) formed by the closure lip (3n) and the counter lip (3o) is closed during the assembly of the safety ring (3) by lateral pressure against the counter lip (3o) with the aid of a continuous cord or hose (10) which is round in cross-section and consists of an elastomer and which is loosely interposed between the said two sealing lips or is secured to one of the sealing lips by adhesion.

7. A safety ring according to claim 6, characterized in that a continuous or interrupted rib (11a), which engages in a corresponding continuous recess in the closure lip (3n) or the counter lip (3o), is provided on the continuous cord or hose (11) acting as a closure of the continuous cavity (8) filled with the lubricant.

8. A safety ring according to the preamble of claim 1, characterized in that in the cavity (8) formed by the closure lip (3p) and the counter lip (3q) there is disposed a hose (12) which, where appropriate, is composed of pieces and is closed at its ends or is endless and which is filled with lubricant, and which at the beginning of emergency running moves from the opening cavity (8) into the interior of the tyre, where it is destroyed by the action of friction, crushing and heat and releases the lubricant.

9. A safety ring according to the preamble of claim 1, characterized in that a thin-walled hose (12) closed at its ends and filled with the lubricant is gripped in a groove (12a) of the continuous undercut (7) adapted to the shape of the hose and, where appropriate, is also secured in the groove (12a) by adhesion, and in the event of emergency running is destroyed by compression action on the part of the associated tongue (3c) and so releases the lubricant.

## Revendications

1. Anneau de sécurité (3) en caoutchouc, ou en autres élastomères, se plaçant dans des bandages pneumatiques (2) pour véhicules automobiles montés sans chambre à air sur des jantes (1) à base plate, cet anneau de sécurité étant logé sur la jante avec son pied (3a) occupant l'espace entre les bourrelets du bandage et possédant, sur au moins un de ses côtés dirigés vers le bandage pneumatique (2), au moins une cavité périphérique (8) qui contient un lubrifiant, susceptible d'être fermée au moyen d'une lèvre de fermeture (3d, 3r, 3g, 3i, 3l, 3n, 3p) et d'une lèvre antagoniste (3e, 3u, 3h, 3k, 3m, 3o, 3q) correspondante tenue fermée, quand le bandage pneumatique (2) est intact, par la pression règnant à l'intérieur de celui-ci ainsi que par une précontrainte axiale, l'anneau de sécurité comportant au moins une découpe interne annulaire (7) limitée par des languettes élastiques (3c) servant de bras de leviers moteurs qui, à la suite du dégonflage du bandage pneumatique (2), sont pressés par la poussée de la paroi externe du bandage (2a) sur l'anneau de sécurité (3) vers le fond de la découpe interne (7) et mettent ainsi les lèvres de fermeture (3d, 3r, 3g, 3i, 3l, 3n, 3p) qui leur sont réunies en tant que bras de leviers résistants, dans une position d'ouverture libérant le lubrifiant si bien que celui-ci parvient entre les surfaces — qui se touchent — du bandage pneumatique (2) et de l'anneau de sécurité (3), pour les graisser, caractérisé en ce que la lèvre de fermeture (3d) ou la lèvre antagoniste (3e) est munie d'une ou plusieurs saillies (3f) à profil de denture qui assurent l'étanchéité de la cavité (8) remplie du lubrifiant à l'intérieur du bandage pneumatique (2) gonflé à sa pression de gonflage.

2. Anneau de sécurité selon le préambule de la revendication 1, caractérisé en ce que la lèvre de fermeture (3r) présente une surface de fermeture dentée (3s), qui engrène avec la surface dentée et décalée en correspondance de la lèvre antagoniste (3u) et qui assure l'étanchéité de la cavité annulaire (8) remplie de lubrifiant à l'intérieur du bandage pneumatique (2) gonflé à sa pression de gonflage.

3. Anneau de sécurité selon le préambule de la revendication 1, caractérisé en ce que l'extrémité de la lèvre de fermeture (3g) a en coupe transversale un profil en crochet et elle s'accroche de manière détachable avec un évidement feiblement entaillé en arrière et adapté au profil de son extrémité crochue prévu sur la lèvre antagoniste (3h), de sorte que la cavité annulaire (8) remplie de lubrifiant, est fermée hermétiquement à l'intérieur du bandage pneumatique (2) gonflé à sa pression de gonflage.

4. Anneau de sécurité selon la préambule de la revendication 1, caractérisé en ce que les lèvres annulaires d'étanchéité disposées des deux côtés de l'anneau de sécurité, c'est-à-dire la lèvre de fermeture (3i) et la lèvre antagoniste (3k), sont réunies l'une à l'autre à leurs extrémités par une peau mince réalisée par vulcanisation de matériau de base au moment de la fabrication de l'anneau de sécurité (3), cette peau servant de ligne de rupture prédéterminée pendant le service de secours du bandage pneumatique (2).

5. Anneau de sécurité selon la préambule de la revendication 1, caractérisé en ce que la cavité annulaire (8) limitée par la lèvre de fermeture (3l) et la lèvre antagoniste (3m) et remplie de lubrifiant est fermée de l'extérieur par une bande annulaire (9), qui sert de zone de rupture prédéterminée pendant le service de secours du bandage pneumatique (2).

6. Anneau de sécurité suivant le préambule de la revendication 1, caractérisé en ce que la cavité annulaire (8) limitée par la lèvre de fermeture (3n) et la lèvre antagoniste (3o) est fermée, au moment du montage de l'anneau de sécurité (3) par une pression latérale exercée sur la lèvre antagoniste (3o), à l'aide d'un boudin ou d'un tuyau annulaire (10) en élastomère à section droite ronde, introduit entre ces deux lèvres d'étanchéité ou fixé par collage à l'une des lèvres d'étanchéité.

7. Anneau de sécurité selon la revendication 6, caractérisé en ce que, sur le boudin ou tuyau périphérique (11) servant de moyen de fermeture de la cavité annulaire (8) remplie de lubrifiant, il est fixé une nervure annulaire ou interrompue (11a) qui s'engage dans un évidement annulaire correspondant prévu sur la lèvre de fermeture (3n) ou sur la lèvre antagoniste (3o).

8. Anneau de sécurité selon le préambule de la revendication 1, caractérisé en ce que, dans la cavité (8) limitée par la lèvre de fermeture (3p) et la lèvre antagoniste (3q), est logé un tuyau (12) annulaire, ou fermé à ses extrémités, rempli de lubrifiant, ou éventuellement composé de tronçons successifs de tuyaux, qui, au moment où se produit le service de secours, passe de la cavité (8) qui s'ouvre à l'intérieur du bandage pneumatique, où il est détruit sous l'action du frottement, de l'écrasement et de la chaleur et ou il libère le lubrifiant.

9. Anneau de sécurité selon le préamble de la revendication 1, caractérisé en ce qu'un tuyau (12) à paroi mince, fermé à ses extrémités et rempli de lubrifiant est retenu dans une rainure (12a) appropriée à son profil de la découpe annulaire (7) et ist est en plus, éventuellement, fixé par collage dans la rainure (12a), ce tuyau, en cas de service de secours, étant détruit sous l'effet de la pression provenant de la languette correspondante (3c) et libérant ainsi le lubrifiant.

Fig. 1

Fig. 2

Fig.2a

Fig. 3

Fig. 4

Fig. 5

Fig. 6

Fig. 7

Fig. 8

Fig. 9